# FASCICULE DE BREVET EUROPEEN

(11) **EP 0 661 517 B1**
(45) Date de publication et mention de la délivrance du brevet: **04.03.1998**
(21) Numéro de dépôt: 95400005.5
(22) Date de dépôt: 03.01.1995
(51) Int. Cl.: G01B 11/00, A01J 7/00

(54) **Capteur de position d'un trayon du pis d'un quadrupède, notamment d'une vache**
Positionssensor für die Zitze des Euters von einem Vierbeiner, insbesondere einer Kuh
Position transducer of the teat of the udder of a four-legged animal, particularly of a cow

(30) Priorité: 04.01.1994 FR 9400022
(43) Date de publication de la demande: 05.07.1995
(73) Titulaire: SAGEM SA, F-75783 Paris Cédex 16 (FR)
(72) Inventeur: Merlin, Bruno, F-95100 Argenteuil (FR)
(74) Mandataire: Gorrée, Jean-Michel

(56) Documents cités:
- EP-A- 0 213 660
- EP-A- 0 329 248
- EP-A- 0 472 247
- WO-A-90/07268

## Description

La présente invention concerne des perfectionnements apportés aux capteurs permettant de déterminer la position d'un trayon du pis d'un mammifère, notamment d'une vache, en vue par exemple d'autoriser la mise en place, sur ce trayon, d'un gobelet trayeur faisant partie d'une installation de traite automatique.

On connaît déjà plusieurs prototypes d'installations de traite automatique (c'est-à-dire sans intervention humaine), mais aucune ne fonctionne correctement en particulier en raison d'une mise en place imparfaite des gobelets trayeurs sur les trayons du pis des animaux. Le taux de réussite ne dépasse pas, actuellement, 85 % et 75 % selon que les vaches sont préalablement triées ou non, respectivement, alors qu'il serait souhaitable d'atteindre un taux de réussite de 98 % au moins sur un troupeau trié pour que ces installations se révèlent intéressantes en pratique courante.

La difficulté principale s'opposant à l'obtention du taux de réussite souhaité est due au manque de précision de la détection de la position exacte de chaque trayon : cette détection conditionne la réussite de la mise en place du gobelet trayeur qui est porté à l'extrémité d'un bras mobile asservi aux informations détectées sur la localisation du trayon.

Cette localisation est effectuée en deux étapes, savoir : d'abord une localisation rudimentaire qui doit donner en temps réel la position dans l'espace d'un des trayons pris comme trayon de référence avec une précision de 5 à 10 mm, la position approximative des autres trayons (trois dans le cas d'une vache) étant ensuite déduite de la localisation du trayon de référence (par exemple par cartographie) ; puis une localisation fine subséquente assurée par un second système de détection qui donne de façon séquentielle la position également en temps réel de chacun des trayons avec une précision inférieure à 5 mm.

On connaît déjà plusieurs réalisations de capteur pour la localisation fine d'un trayon.

Dans une réalisation connue, le capteur est solidaire du gobelet trayeur, chaque gobelet étant muni de son capteur qui l'entoure. Cet agencement conduit à des gobelets de trop grand diamètre et il n'est pas possible de les mettre en place sur des trayons trop rapprochés ; une diminution de leur taille risque par contre d'empêcher de suivre les déplacements de l'animal.

Dans une autre réalisation connue, un capteur optique en forme de pince est solidaire du bras mécanique qui pose les gobelets séquentiellement, avec cet inconvénient que le capteur accompagne le bras à chaque retour de celui-ci vers un magasin pour prendre un nouveau gobelet.

Dans encore une autre réalisation connue, le capteur est constitué sous forme d'une pince optique montée sur un bras spécifique qui revient en position de repos après la pose de chaque gobelet.

Outre leurs inconvénients propres respectifs précités, tous ces capteurs connus présentent en outre l'inconvénient commun de ne permettre qu'une localisation en plan (localisation en X-Y) dans l'espace qu'ils balayent. Une telle détection se révèle, à l'expérience, très insuffisante dans certains cas pratiques pour obtenir une mise en place correcte du gobelet trayeur sur le trayon dès lors que le gobelet est déplacé, pour venir coiffer le trayon, approximativement perpendiculairement au domaine X-Y balayé par le capteur et avec son axe dirigé approximativement perpendiculairement à ce domaine. En particulier, si le trayon s'étend de façon inclinée par rapport au domaine X-Y balayé par le capteur, le gobelet ne parvient pas à coiffer correctement le trayon, voire même l'orifice du gobelet peut ne pas être présenté exactement en regard du bout du trayon et dans l'axe du trayon et le trayon peut alors être replié en deux sur l'orifice du gobelet : à tout le moins, la traite ne n'effectue pas convenablement, et parfois l'animal risque d'être blessé.

Par ailleurs, on connaît, d'après le document EP-0 213 660, un agencement de capteur de détection de position d'un trayon utilisant des faisceaux optiques croisés, capteur qui comporte un support fermé en forme de bague supportant les émetteurs et récepteur de rayonnement. Le support en forme de bague est constitué de deux demi-tronçons articulés l'un à l'autre, de sorte que la bague peut être ouverte pour une mise en place ou un retrait transversalement au trayon. Toutefois, un tel agencement présente l'inconvénient que, lorsque la bague est ouverte, le capteur possède un encombrement important et son déplacement sous le pis d'un animal risque d'être gêné par les gobelets déjà en place sur les trayons.

Le document WO-90/07 268 montre un agencement de capteur de position de forme générale approximativement carrée, constitué de deux demi-parties qui sont articulées l'une à l'autre. Ce capteur est donc ouvrable, avec toutefois le même inconvénient d'encombrement excessif en position ouverte que le capteur précédent.

L'invention s'intéresse exclusivement au capteur de localisation fine et vise à proposer un tel capteur qui écarte les inconvénients précités des capteurs actuellement connus et qui donne mieux satisfaction aux diverses exigences de la pratique courante, en proposant notamment un capteur qui détermine la localisation d'un trayon avec une très grande précision dans l'espace de manière que le gobelet trayeur correspondant puisse être guidé de façon très précise jusqu'au trayon et être mis en place sur celui-ci de façon parfaitement coaxiale et avec un enfoncement optimal, de sorte que le taux de réussite puisse atteindre une valeur optimale telle que 98 % recherchée, et qui présente un faible encombrement pour faciliter sa mise en place.

A ces fins, l'invention propose un capteur de position d'un trayon du pis d'un quadrupède, notamment d'une vache, comportant un support présentant une configuration fermée sur elle-même en forme de bague destiné à entourer le trayon et un ensemble d'émetteurs et de récepteurs optoélectriques alternés selon une configuration prédéterminée sur toute la périphérie intérieure dudit support en forme de bague de manière telle que la totalité de l'espace intérieur du support soit balayé par les faisceaux des émetteurs, capteur qui, étant agencé conformément à l'invention, se caractérise essentiellement en ce que le support en forme de bague présente au moins une portion mobile vers l'extérieur pour constituer au moins une porte autorisant le dégagement transversal du support engagé autour d'un trayon.

Grâce à cet agencement, le capteur conforme à l'invention présente toujours le même encombrement transversal, que la (ou les) porte soit ouverte ou non. Il est ainsi plus aisé de le déplacer sous le pis d'un animal sans être gêné par les gobelets déjà en place sur les trayons. En outre, le capteur n'est pas lié aux gobelets ; il est mobile et monté à l'extrémité d'un bras qui le déplace de trayon en trayon. Ce capteur permet de suivre en temps réel les déplacements du trayon et la montée du gobelet qui doit être fixé au trayon.

Dans un mode de réalisation simple, la porte est montée pivotante vers l'extérieur avec rappel élastique dans une position de fermeture correspondant à la continuité du support. Bien entendu, un système de porte commandée peut être envisagé, mais son coût est élevé et un entretien est à prévoir.

En pratique, le support peut être en forme de bague sensiblement circulaire, forme qui est à la fois la mieux appropriée à la morphologie moyenne du trayon et celle qui simplifie le plus le décodage des signaux reçus par les récepteurs optoélectriques en raison de la symétrie de révolution et de l'équidistance approximative de tous les photorécepteurs par rapport au centre du capteur. Pour faciliter le positionnement du capteur autour du trayon, il est souhaitable que le support en forme de bague sensiblement circulaire ait un diamètre compris entre environ deux et quatre fois le diamètre moyen d'un trayon, ce qui en outre laisse un espace annulaire suffisant pour que l'extrémité supérieure du gobelet mis en place sur le trayon s'engage à l'intérieur du capteur.

Toutefois, pour des raisons technologiques et de recherche d'un faible coût de réalisation (les émetteurs et récepteurs utilisés peuvent être disponibles dans le commerce sous forme de barrettes rectilignes), il peut être plus intéressant et moins coûteux de donner au support une forme polygonale, notamment approximativement hexagonale ou octogonale, de manière à simplifier le montage des photodiodes et des phototransistors. Ceux-ci peuvent alors être implantés sur des circuits imprimés rectangulaires fixés sur les faces internes du support polygonal. La dimension transversale du support est du même ordre de grandeur que celle indiquée pour un support circulaire.

De préférence, le support en forme de bague possède une hauteur telle que plusieurs ensembles d'émetteurs et récepteurs optoélectriques sont disposés les uns au-dessus des autres sur la surface intérieure du support. Grâce à cet agencement, il est possible de déterminer avec précision la position, dans l'espace (c'est-à-dire dans un repère X-Y-Z) balayé par le capteur, de l'extrémité du trayon, et également la position de l'axe du trayon par rapport à l'axe perpendiculaire au support (axe Z), autrement dit l'inclinaison du trayon par rapport à l'axe du support. Le gobelet peut ensuite, sur la base des indications ainsi recueillies, non seulement être amené avec son orifice précisément en regard de l'extrémité du trayon, mais également être incliné, si besoin est, de la valeur appropriée et dans le sens approprié pour que son axe coïncide avec l'axe du trayon ; ensuite de quoi le gobelet peut être enfoncé coaxialement sur le trayon de la distance requise sans risque d'un positionnement défectueux et d'une blessure causée à l'animal. Dans un agencement qui, à l'heure actuelle, paraît suffisant, les ensembles d'émetteurs et récepteurs photoélectriques sont disposés les uns au-dessus des autres en au moins trois ensembles.

L'invention sera mieux comprise à la lecture de la description détaillée qui suit d'un mode de réalisation préféré donné uniquement à titre purement illustratif. Dans cette description, on se réfère aux dessins annexés sur lesquels :
- la figure 1 est une vue de dessus très schématique d'un capteur agencé conformément à l'invention ;
- la figure 2 est une vue très schématique en coupe diamétrale du capteur de la figure 1 ; et
- la figure 3 est une vue très schématique de côté illustrant le fonctionnement du capteur des figures 1 et 2 et la mise en place d'un gobelet.

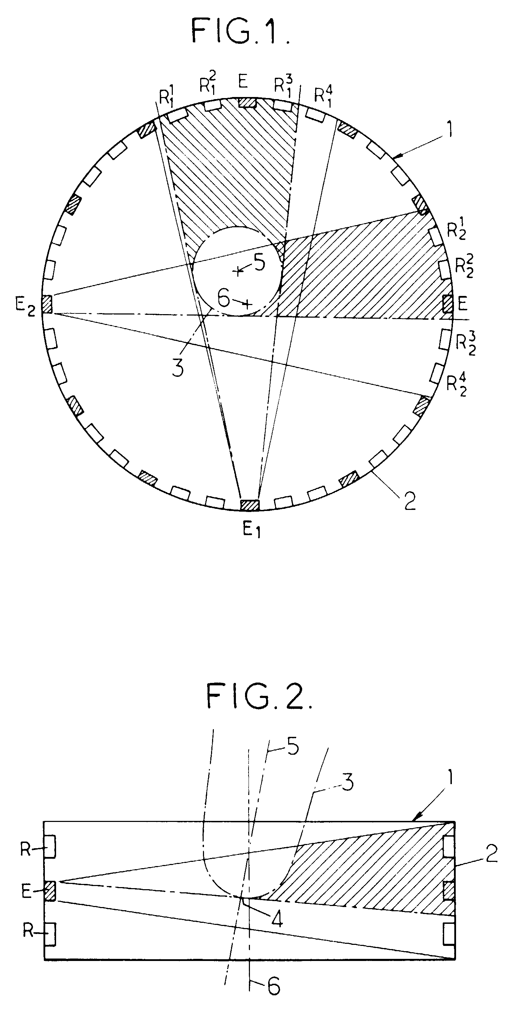

En se référant tout d'abord aux figures 1 et 2, le capteur de position, désigné dans son ensemble par la référence numérique 1, comprend un support 2 présentant une configuration fermée sur elle-même en forme de bague, de préférence sensiblement circulaire comme représenté en raison des avantages présentés par la symétrie radiale, en particulier pour ce qui concerne la simplification de l'électronique de traitement des signaux. Le support 2 possède une dimension transversale minimale, respectivement un diamètre minimum qui est comprise avantageusement entre environ deux et quatre fois le diamètre moyen du trayon 3 (le trayon 3 est schématisé en trait mixte sur les figures 1 et 2), de manière à faciliter la mise en place du support 2 autour du trayon 3 même si celui-ci est incliné par rapport à la direction d'approche (par exemple verticale) du support 2 ; en outre, une telle dimension autorise ultérieurement le passage de l'extrémité supérieure du gobelet, mis en place sur le trayon, à l'intérieur du support comme cela apparaîtra plus loin.

Sur la surface intérieure du support 2 sont disposés des émetteurs E et des récepteurs R optoélectriques (p.ex. lumière visible ou en infra-rouge), tels que des diodes électroluminescentes (LED) pour les émetteurs et des transistors photorécepteurs pour les récepteurs. Ces émetteurs et récepteurs sont répartis régulièrement sur la périphérie du support 2 selon une disposition alternée, de préférence régulière circonférentiellement toujours dans le but de simplifier le décodage des signaux. Par exemple, comme montré à la figure 1, un émetteur E alterne avec deux récepteurs R, mais toute autre disposition peut être retenue. Une répartition périphérique monocouche d'émetteurs E et de récepteurs R constitue un ensemble.

Le capteur 1 comporte plusieurs ensembles d'émetteurs et/ou de récepteurs disposés les uns au-dessus des autres, le support 2 possédant une hauteur appropriée à cet effet. Le nombre des ensembles superposés d'émetteurs et/ou de récepteurs dépend à la fois de la longueur du trayon (donc du type d'animal, et éventuellement de la race pour un type donné) et de la précision verticale (Z) souhaitée. Dans l'exemple représenté aux figures 1 et 2, le capteur 1, destiné à être utilisé pour la localisation du trayon d'une vache, possède typiquement un diamètre d'environ 80 mm (pour un diamètre moyen typique du trayon d'environ 25 mm) et une hauteur d'environ 35 mm, le nombre des ensembles superposés d'émetteurs et/ou de récepteur étant de trois.

Non seulement l'alternance des émetteurs et des récepteurs,mais aussi la constitution des différents ensembles peuvent donner lieu à de nombreuses variantes de réalisation.

Ainsi, tous les ensembles peuvent comporter une alternance choisie d'émetteurs E et de récepteurs R (l'alternance choisie pouvant différer pour chaque ensemble) ; on peut alors faire en sorte que ces ensembles soient décalés angulairement les uns par rapport aux autres de manière qu'un émetteur d'un ensemble soit associé verticalement à des récepteurs. Dans de tels agencements, les émetteurs et les récepteurs doivent être configurés de manière que les rayonnements soient sensiblement plans pour ne pas perturber les ensembles immédiatement inférieurs et/ou supérieurs.

Dans d'autres agencements possibles, un seul ensemble (par exemple l'ensemble central sur la figure 2) comporte une alternance choisie d'émetteurs E et de récepteurs R, tandis que les ensembles situés au-dessus et en-dessous sont constitués uniquement de récepteurs R. Les émetteurs émettent alors un rayonnement conique tridimensionnel qui excite non seulement les récepteurs opposés à un émetteur dans le même ensemble que celui-ci, mais également les récepteurs situés au-dessus et/ou au-dessous de ceux-ci.

Quoi qu'il en soit, en se reportant à la figure 1, un rayonnement émis par un émetteur E₁ excite, à vide, un nombre prédéterminé (quatre sur la figure 1) de récepteurs approximativement diamétralement opposés R¹₁, R²₁, R³₁ et R⁴₁. Lorsque le capteur 1 est mis en place autour d'un trayon 3 (montré non centré), celui-ci occulte tout ou partie du rayonnement issu de l'émetteur E₁ : R¹₁, R²₁ et R³₁ ne sont plus excités, tandis que R⁴₁ reçoit toujours le rayonnement.

De la même manière, le rayonnement en provenance d'un autre émetteur E₂ est occulté par le trayon pour les récepteurs associés R¹₂ et R²₂, mais excite toujours les récepteurs associés R³₂ et R⁴₂. Et ainsi de suite pour tous les émetteurs Eᵢ et les récepteurs associés R¹ᵢ, R²ᵢ, R³ᵢ et R⁴ᵢ.

Les signaux électriques fournis par tous les récepteurs R d'un ensemble sont ensuite décodés par un bloc électronique (non montré) dont la réalisation relève de la compétence classique de l'Homme de l'Art et qui n'a pas à être détaillée ici, pour fournir, sous forme de coordonnées X et Y, la position du trayon 3 par rapport au support 2 (par exemple par rapport au centre du support circulaire).

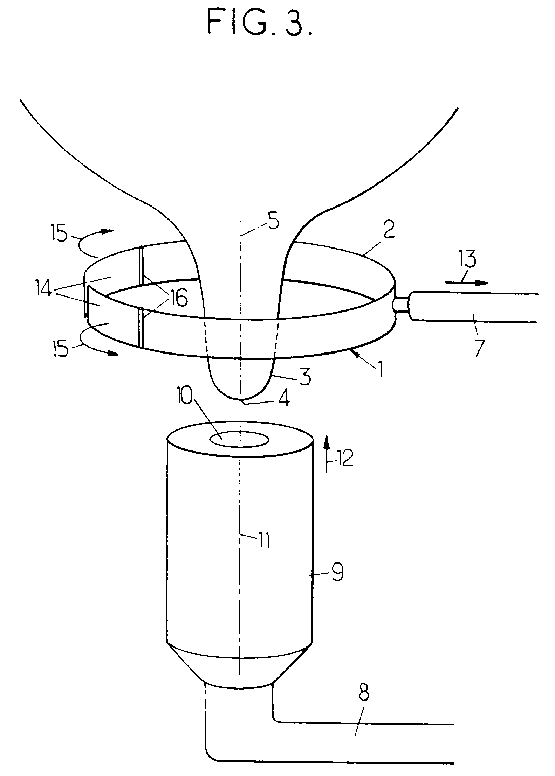

Un décodage analogue effectué sur les récepteurs de tous les ensembles disposés les uns au-dessus des autres (figure 2) permet de localiser le trayon verticalement par rapport au support 2 (par exemple par rapport au milieu de l'axe du support circulaire). Notamment on peut ainsi localiser l'extrémité 4 du trayon et connaître la position relative de ladite extrémité 4 et du support 2 lorsque le support 2, amené sous le trayon grâce aux moyens de localisation approximative, est ensuite remonté verticalement pour entourer le trayon comme montré à la figure 3.

On conçoit également que, ayant détecté la position de l'extrémité 4 du trayon et détectant en permanence la position du corps du trayon au cours de la montée du support 2, on détermine également la situation de l'axe moyen 5 du trayon (voir figure 2), et donc son inclinaison (valeur angulaire et direction) par rapport à l'axe 6 du support.

Ensuite de quoi, en combinant les informations de la localisation (X, Y, Z) du trayon 3 par rapport au support 2, de la position du bras 7 de support du capteur 1, de la position du bras 8 de support du gobelet trayeur 9 et de la position (inclinaison) du gobelet trayeur 9 par rapport à son bras, il est possible d'amener, avec la précision souhaitée, le gobelet trayeur 9 sous le trayon 3, avec l'orifice 10 du gobelet 9 en regard de l'extrémité 4 du trayon 3 et l'axe 11 du gobelet 9 coaxial à l'axe moyen du trayon (autrement dit, le gobelet étant incliné de façon correcte en valeur angulaire et en direction si le trayon est lui-même incliné). Le positionnement correct du gobelet est facilité si le capteur 1, initialement présenté excentré autour du trayon, a été ensuite recentré sur celui-ci.

Ensuite, le gobelet 9 est soulevé (flèche 12) pour coiffer le trayon 3 et le capteur 1 doit alors être dégagé pour positionner un autre gobelet sur un autre trayon.

Le capteur ne pouvant plus être dégagé par le bas en raison de la présence du gobelet 9, il doit être dégagé transversalement (flèche 13). A cette fin, le support 2 est agencé sous forme ouvrante, avec au moins une portion pivotante formant porte ; sur la figure 3, on a prévu deux portes 14 s'ouvrant vers l'extérieur (flèche 15) autour de charnières 16. Une réalisation très simple et ne nécessitant aucun entretien consiste en ce que les charnières 16 soient élastiques, de sorte que les portes 14 soient automatiquement rappelées en position de fermeture. Des portes à ouverture et fermeture commandées sont envisageables, mais sont plus chères de construction et nécessitent un entretien.

Les portes, quels qu'en soient la conception et le mode de fonctionnement, présentent une étendue suffisante pour le passage d'un trayon et relativement faible par rapport au périmètre de la bague. Ainsi le capteur agencé conformément à l'invention présente un encombrement transversal qui reste sensiblement le même, que la (ou les) porte soit ouverte ou fermée. Son déplacement sous le pis de l'animal est rendu alors plus aisé, sans être gêné par les gobelets déjà en place sur les trayons. En outre, on notera ici que le capteur n'est pas lié aux gobelets ; il est mobile et, comme indiqué plus haut, il est monté à l'extrémité d'un bras qui le déplace de trayon en trayon.

En pratique, une configuration polygonale, notamment hexagonale ou octogonale, de la bague peut être plus avantageuse, pour une fabrication courante, qu'une forme circulaire de manière à faciliter le montage des émetteurs et récepteurs photoélectriques qui sont disponibles dans le commerce sous forme de barrette rectiligne groupant plusieurs composants.

Comme il va de soi et comme il résulte déjà de ce qui précède, l'invention ne se limite nullement à ceux de ses modes d'application et de réalisation qui ont été plus particulièrement envisagés ; elle en embrasse, au contraire, toutes les variantes qui sont définies par les revendications suivantes.

## Revendications

1. Capteur (1) de position d'un trayon (3) du pis d'un mammifère, notamment d'une vache, comportant un support (2) présentant une configuration fermée sur elle-même en forme de bague destiné à entourer le trayon (3) et un ensemble d'émetteurs (E) et de récepteurs (R) optoélectriques alternés selon une configuration prédéterminée sur toute la périphérie intérieure dudit (2) support en forme de bague de manière telle que la totalité de l'espace intérieur du support soit balayé par les faisceaux des émetteurs,
caractérisé en ce que le support (2) en forme de bague présente au moins une portion (14) mobile vers l'extérieur pour constituer au moins une porte autorisant le dégagement transversal du support engagé autour d'un trayon.

2. Capteur selon la revendication 1, caractérisé en ce que la porte (14) est montée pivotante vers l'extérieur avec rappel élastique en position de fermeture correspondant à la continuité du support.

3. Capteur selon la revendication 1 ou 2, caractérisé en ce que le support (2) est en forme de bague sensiblement circulaire.

4. Capteur selon la revendication 3, caractérisé en ce que le support (2) en forme de bague sensiblement circulaire a un diamètre compris entre environ deux et quatre fois le diamètre moyen d'un trayon (3).

5. Capteur selon l'une quelconque des revendications 1 à 4, caractérisé en ce que le support en forme de bague possède une hauteur telle que plusieurs ensembles d'émetteurs et récepteurs optoélectriques sont disposés les uns au-dessus des autres sur la surface intérieure du support.

6. Capteur selon l'une quelconque des revendications 1 à 5, caractérisé en ce que les ensembles d'émetteurs et récepteurs photoélectriques sont disposés les uns au-dessus des autres en au moins trois ensembles.

7. Capteur selon l'une quelconque des revendications 1 à 5, caractérisé en ce que les émetteurs et récepteurs photoélectriques fonctionnent en lumière visible ou en rayonnement infrarouge.

## Patentansprüche

1. Positionssensor (1) für die Zitze (3) eines Euters eines Säugetiers, insbesondere einer Kuh, mit einer Auflagevorrichtung (2), die eine in sich geschlossene Form in Gestalt eines Rings aufweist, der die Zitze (3) umgeben soll, und mit einer Einheit von photoelektrischen Sendern (E) und Empfängern (R), die abwechselnd in vorbestimmter Gestaltung über den gesamten Innenumfang der ringförmigen Auflagevorrichtung (2) angeordnet sind, so daß der gesamte innere Raum der Auflagevorrichtung von den Strahlenbündeln der Sender bestrichen wird,
dadurch gekennzeichnet, daß die ringförmige Auflagevorrichtung (2) wenigstens einen Abschnitt (14) aufweist, der nach außen beweglich ist, so daß er wenigstens eine das seitliche Entfernen der um eine Zitze anliegenden Auflagevorrichtung ermöglichende Klappe bildet.

2. Sensor nach Anspruch 1, dadurch gekennzeichnet, daß die Klappe (14) nach außen verschwenkbar mit elastischer Rückstellung in eine dem stetigen Verlauf der Auflagevorrichtung entsprechende Schließstellung angeordnet ist.

3. Sensor nach Anspiuch 1 oder 2, dadurch gekennzeichnet, daß die Auflagevorrichtung (2) in Form eines im wesentlichen kreisförmigen Rings ausgebildet ist.

4. Sensor nach Anspruch 3, dadurch gekennzeichnet, daß die Auflagevorrichtung (2) in Form eines im wesentlichen kreisförmigen Rings einen Durchmesser aufweist, der etwa zwei- bis viermal so groß ist wie der durchschnittliche Durchmesser einer Zitze (3).

5. Sensor nach einem der Ansprüche 1 bis 4, dadurch gekennzeichnet, daß die ringförmige Auflagevorrichtung eine solche Höhe aufweist, daß mehrere Einheiten von photoelektrischen Sendern und Empfängern übereinander auf der Innenfläche der Auflagevorrichtung angeordnet sind.

6. Sensor nach einem der Ansprüche 1 bis 5, dadurch gekennzeichnet, daß wenigstens drei Einheiten von photoelektrischen Sendern und Empfängern übereinander angeordnet sind.

7. Sensor nach einem der Ansprüche 1 bis 5, dadurch gekennzeichnet, daß die photoelektrischen Sender und Empfänger mit sichtbarem Licht oder mit Infrarotstrahlung arbeiten.

## Claims

1. Position transducer (1) for a teat (3) of the udder of a mammal, particularly of a cow, including a support (2) having a configuration closed upon itself in the shape of a ring and intended to surround the teat (3) and an assembly of optoelectric transmitters (E) and receivers (R) alternating in a predetermined configuration over the entire inner periphery of the said support (2) in the shape of a ring in a manner such that the whole of the inner space of the support is scanned by the beams of the transmitters, characterised in that the support (2) in the shape of a ring has at least one portion (14) movable outwards to form at least one gate allowing transverse disengagement of the support engaged around a teat.

2. Transducer according to Claim 1, characterised in that the gate (14) is mounted to pivot outwards with resilient return to the closed position corresponding to the continuity of the support.

3. Transducer according to Claim 1 or 2, characterised in that the support (2) is in the shape of a substantially circular ring.

4. Transducer according to Claim 3, characterised in that the support (2) in the shape of a substantially circular ring has a diameter of between approximately two and four times the mean diameter of a teat (3).

5. Transducer according to any one of Claims 1 to 4, characterised in that the support in the shape of a ring has a height such that a plurality of assemblies of optoelectric transmitters and receivers are disposed one above the other on the inner surface of the support.

6. Transducer according to any one of Claims 1 to 5, characterised in that the assemblies of photoelectric transmitters and receivers are disposed one above the other in at least three assemblies.

7. Transducer according to any one of Claims 1 to 5, characterised in that the photoelectric transmitters and receivers operate with visible light or infrared radiation.
